## Europäisches Patentamt
## European Patent Office
## Office européen des brevets

(19)

(11) Veröffentlichungsnummer: **0 046 190**
**B1**

(12)

# EUROPÄISCHE PATENTSCHRIFT

(45) Veröffentlichungstag der Patentschrift:
02.10.85

(51) Int. Cl.⁴: **C 08 J 3/10, C 10 L 1/18**

(21) Anmeldenummer: **81105447.7**

(22) Anmeldetag: **13.07.81**

(54) **Verfahren zur Herstellung von Polymerisat-Sekundärdispersionen und die Verwendung der Sekundärdispersionen als Stockpunktserniedriger für Mineralöle.**

(30) Priorität: **20.08.80 DE 3031344**

(43) Veröffentlichungstag der Anmeldung:
**24.02.82 Patentblatt 82/8**

(45) Bekanntmachung des Hinweises auf die Patenterteilung:
**02.10.85 Patentblatt 85/40**

(84) Benannte Vertragsstaaten:
**DE FR GB NL**

(56) Entgegenhaltungen:
**DE - A - 1 645 873**
**DE - B - 1 237 311**
**US - A - 3 347 811**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Hann, Ernst Wilhelm, Prinzregentenstrasse 37, D-6700 Ludwigshafen (DE)**
Erfinder: **Slotman, Wilhelmus c/o Behn, Meyer & Co. Ltd., P.O. Box 2000, Singapore 5 (SG)**
Erfinder: **Buettner, Egon, Wolframstrasse 16, D-6700 Ludwigshafen (DE)**
Erfinder: **Barthold, Klaus, Dr., Paulusbergstrasse 4, D-6800 Ludwigshafen (DE)**

## Beschreibung

Die Erfindung betrifft ein Verfahren zur Herstellung von Polymerisat-Sekundärdispersionen, die lagerstabil, fließ- und pumpfähig und dadurch leicht zu handhaben sind. Die Erfindung betrifft weiter die Verwendung der so hergestellten Dispersionen als Stockpunktserniedriger für Mineralöle.

Bei Rohölen oder raffinierten Mineralölen kann sich bei deren Handhabung das Problem des Stockpunkts stellen.

Der Stockpunkt ist die Temperatur, bei der in dem Mineralöl die Anteile mit höherem Schmelzpunkt erstarren, wodurch das Öl so hochviskos wird, daß es nicht mehr handzuhaben ist.

Man setzt daher den Ölen Substanzen zu, die ein solches Erstarren bei den Verarbeitungstemperaturen verhindern, d. h. den Stockpunkt herabsetzen.

Als geeignete Stoffe hierfür eignen sich bestimmte Polymerisate, und zwar vor allem Copolymerisate des Ethylens mit Vinylestern oder Vinylethern.

Aus der US-PS 3 048 479 und der GB-PS 1 147 904, die von der sehr umfangreichen Patentliteratur repräsentativ genannt werden sollen, sind z. B. Ethylen-Vinylacetat-Copolymerisate als solche Stockpunktserniedriger bekannt. Die Schwierigkeit bei der Handhabung dieser Copolymerisate, die an sich ausgezeichnete Eigenschaften als Stockpunktserniedriger zeigen, besteht darin, daß besonders die höhermolekularen Vertreter in organischen Lösungsmitteln in höheren Konzentrationen gelöst so hochviskos anfallen, daß sie nicht mehr fließ- und pumpfähig und somit nicht mehr dosierbar sind.

In fester Form zugesetzt sind sie hier wiederum in Mineralöl nur langsam löslich und nicht homogen verteilbar. Man war daher gezwungen, stark verdünnte Lösungen der Polymerisate (höchstens 10% Polymerisatgehalt) anzuwenden, wodurch aufwendige Lagerungs- und Transportprobleme beim Lieferanten und Endabnehmer auftraten.

Es war auch schon die Herstellung von wäßrigen Dispersionen von Ethylen/Vinylacetat-Copolymerisaten bekannt. Gemäß DE-AS 1 237 311 ging man dabei so vor, daß man das Copolymerisat in tert. Butanol oder tert.-Butanol-/Benzol-Gemischen löste und diese Lösung in Gegenwart eines anionischen und nichtionischen Emulgators in Wasser emulgierte und anschließend das Lösungsmittel destillativ entfernte. Diese Dispersionen sollten laut den Angaben dieser Patentschrift als z. B. Beschichtungsmittel für Papier Verwendung finden. Sie sind aber nicht fließ- und pumpfähig, so daß sie nicht als konfektionierte Form eines Mineralöladditivs geeignet sind.

Das Ziel der Erfindung besteht in der Auffindung eines Verfahrens, das es gestattet als Stockpunktsverbesserer bekannte Copolymerisate in eine konzentrierte fließ- und pumpfähige sowie lagerstabile Form zu bringen.

Dieses Ziel wird mit einem Verfahren erreicht, wie es gemäß dem Patentanspruch 1 definiert ist. Es ist damit möglich geworden 20- bis 60-gew.-%ige Sekundärdispersionen zu erhalten, die lagerstabil sowie fließ- und pumpfähig sind, ohne dabei aufzurahmen. Außerdem ist es nicht notwendig, das bei der Herstellung verwendete Lösungsmittel bei der Anwendung als Stockpunktsverbesserer wieder zu entfernen — es verbleibt in dem zu behandelnden Mineralöl und verstärkt eher noch die stockpunkterniedrigende Wirkung.

Die Copolymerisate setzen sich wie folgt zusammen: Die erste Monomerkomponente ist ein $C_2$- bis $C_4$-$\alpha$-Olefin oder Styrol. Bevorzugt setzt man Ethylen ein. Das Olefin ist im Copolymerisat im allgemeinen zu 60 bis 85 Mol-%, vorzugsweise 65 bis 75 Mol-%, enthalten.

Die zweite Komponente ist ein olefinisches Monomer, das mindestens eine Ester- oder Ethergruppierung enthält. Diese Verbindungsgruppe umfaßt beispielsweise Vinyl-, n- oder Isopropenylester kurzkettiger aliphatischer Carbonsäuren mit 2 bis 5 C-Atomen, also beispielsweise Vinylacetat, Vinylpropionat, Vinylbutyrat oder die entsprechenden Isopropenylester. Weiter kommen Ester kurzkettiger ungesättigter aliphatischer $C_3$- bis $C_6$-Carbonsäuren mit $C_1$- bis $C_4$-aliphatischen Alkoholen, wie (Meth)-acrylsäuremethyl-, -ethyl-, -propyl- oder -butylester in Betracht. Schließlich seien $C_1$- bis $C_4$-alkylether von $C_2$- bis $C_4$-$\alpha$-alkenolen, wie Vinyl- oder Isopropenylmethyl-, -ethyl- oder -propylether als geeignete Comonomere genannt. Bevorzugt werden Vinylacetat, Isopropenylacetat, Methacrylsäuremethylester oder Vinylmethylether verwendet. Diese Comonomeren sind im Copolymerisat zu 40 bis 15, vorzugsweise 25 bis 35 Mol-% einpolymerisiert.

Die Copolymerisate erhält man in an sich bekannter Weise durch radikalisch initiierte Copolymerisation der genannten Monomeren kontinuierlich oder diskontinuierlich nach dem Schema einer Substanz-, Lösungs- oder Emulsionspolymerisation und anschließende Trocknung der gebildeten Polymerisate. Sie sind im Handel in Form von Pulvern oder Granulaten erhältlich.

Zur Herstellung der Sekundärdispersion wird das trockene Polymerisat zunächst in einem mit Wasser nicht mischbaren Lösungsmittel gelöst (Schritt a). Solche Lösungsmittel sollen keine polaren Gruppen im Molekül enthalten und sollen Siedepunkte aufweisen, die einen möglichst geringen apparativen Aufwand bei der geforderten Arbeitstemperatur von 60° C und mehr erlauben, d. h. sie sollen Siedepunkte von mindestens 60° C, vorzugsweise 80 bis 200° C unter Normalbedingungen aufweisen. Lösungsmittel, die in Betracht kommen, sind z. B. Cyclohexan, Toluol, Benzol, o- und p-Xylol, sowie deren Gemische oder Benzinfraktionen, die zwischen 80 und 200° C sieden, vorzugsweise Fraktionen der Siedegrenzen 130 bis 190° C.

Die Menge an Lösungsmitteln soll so bemessen werden, daß die Lösungen mindestens 20, vorzugsweise 35 bis 50 Gew.-% an Copolymerisat gelöst enthalten.

Bei der genannten Arbeitstemperatur, die vorzugsweise bei 75 bis 90°C liegen soll, setzt man (Schritt b) der erhaltenen hochviskosen Lösung unter starker mechanischer Bewegung 2 bis 6 Gew.-% des Esters einer $C_{12}$- bis $C_{23}$-gesättigten oder ungesättigten Fettsäure mit einem 3- bis 6-wertigen aliphatischen Alkohols zu. Diese Ester, die öllösliche Emulgatoren darstellen, sind beispielsweise Glycerinmono-, -dioleat oder -stearat, Sorbitanmono- oder -dipalmitat, -stearat oder -oleat. Auch die vollständig veresterten Produkte können Verwendung finden, doch wählt man bevorzugt die vorgenannten Teilester. Technisch von besonderem Interesse sind Sorbitanmonostearat und Sorbitanmonooleat.

Der nächste Schritt c) besteht in der Herstellung der Wasser-in-Öl-Emulsion. Hierbei setzt man — ebenfalls bei den obengenannten Temperaturen — bezogen auf die Lösung — 2 bis 6 Gew.-% des 10- bis 80-fach, vorzugsweise 20 bis 50-fach ethoxylierten $C_8$- bis $C_{20}$-Alkanols oder $C_8$- bis $C_{12}$-Alkylphenols zu. Die Ethoxylate werden in Form einer 20- bis 50gew.-%igen wäßrigen Lösung, die einen pH-Wert von 8,5 bis 11 aufweisen muß, zugeführt. Die Einstellung des pH-Werts kann durch wäßrige Alkalien, wie NaOH, KOH, Soda oder Pottasche oder bevorzugt durch organische Basen, wie Mono-, Di-, Triethanolamin oder — weil besser löslich auch in organischer Phase — Dimethyl- oder Diethylethanol- oder -propanolamin erfolgen.

Dem Ansatz können außerdem noch geringe Mengen (ca. 0,5 bis 1,5 Gew.-% — bezogen auf die Lösung —) eines Entschäumers wie beispielsweise wäßrige Polysiloxanemulsionen zugesetzt werden.

Als nichtionische Emulgatoren, die diese Ethoxylate darstellen, kommen beispielsweise Octanol, Nonanol, Decanol, Dodecanol, Isotridecanol, Stearylalkohol, $C_9$- bis $C_{11}$-, $C_{13}$- bis $C_{15}$-Oxo- oder $C_{12}$- bis $C_{14}$- oder $C_{16}$- bis $C_{18}$-Ziegleralkohole sowie auch Gemische der obengenannten Einzelvertreter und Alkoholgemische, die sich von natürlichen Fettsäuren ableiten, wie Palmkernfettalkohol oder Talgfettalkohol, die alle 10- bis 80-, vorzugsweise 20- bis 50fach ethoxyliert sind, in Betracht. Von den Alkylphenolethoxylaten seien vor allem die Ethoxylate des Isooctyl-, Nonyl- und Dodecylphenols genannt, die den obengenannten Ethoxylierungsgrad aufweisen.

Die Ethoxylate können auch in sulfatierter Form vorliegen — vor allem, wenn der Ethoxylierungsgrad niedriger liegt, und hier seien vor allem Vertreter wie Isooctylphenol, das 25fach ethoxyliert und sulfatiert ist, sowie das entsprechende Derivat des Isononylphenols genannt.

Die Einarbeitung der alkalischen wäßrigen Emulgatorlösung erfolgt durch mechanische Bewegung, wie Rühren.

Der Schritt d) beinhaltet die endgültige Herstellung der Öl-in-Wasser-Emulsion, indem man der erhaltenen Wasser-in-Öl-Emulsion so viel Wasser zufügt, daß sich die Emulsion umkehrt. Dies erreicht man — ebenfalls bei den genannten Arbeitstemperaturen — mit einer Wassermenge — es sollte wenn möglich vollentsalztes Wasser oder Trinkwasser verwendet werden —, die einem Verhältnis Copolymerisat zu Wasser wie 1 : 0,8 bis 1 : 1,2 entspricht.

Nach dem Abkühlen — das Lösungsmittel verbleibt im Ansatz — erhält man eine hervorragend lagerstabile, fließ- und pumpbare Dispersion, deren Viskositätseigenschaften auch eine Handhabung bei Temperaturen von wenig über 0°C gestattet.

Mit der Dispersion, zugesetzt in Mengen von 20 bis 2000 ppm — bezogen auf Mineralöl —, erreicht man Stockpunktserniedrigungen von häufig mehr als 10 bis 40°, und zwar sowohl bei Rohölen als auch bei raffinierten Ölen, wie Schmieröl oder schwerem Heizöl.

Die nun folgenden Beispiele erläutern die Erfindung. Genannte Teile sind Gewichtsteile.

### Beispiel 1

In einem beheizten Rührkessel werden 34,71 Teile Benzin (Siedepunkt 155 bis 185°C) vorgelegt. Hierzu gibt man unter Rühren 27,77 Teile eines Copolymerisats aus 70 Mol-Teilen Ethylen und 30 Mol-Teilen Vinylacetat (Molgewicht 50 000), heizt auf 83 bis 85°C und rührt ca. 1 Stunde weiter. Anschließend setzt man 4,45 Teile Sorbitanmonooleat innerhalb von 30 Minuten zu. Hernach läßt man 6,35 Teile einer 35gew.-%igen wäßrigen Lösung eines sulfatierten 25fach ethoxylierten p-Isooctylphenols, das 0,7 Teile Dimethylethanolamin und 0,7 Teile Tristearylphosphat (Entschäumer) enthält, unter Rühren innerhalb 30 Minuten zulaufen.

Zum Schluß gibt man unter weiterem Rühren 25,32 Teile vollentsalztes Wasser zu (Dauer 30 Minuten) und läßt abkühlen.

Man erhält eine Dispersion mit 35 Gew.-% Festgehalt (Teilchengröße 0,5 µm), die unbegrenzt lagerstabil, fließ- und pumpfähig ist.

### Beispiel 2

2777 Teile eines Copolymerisats aus 68 Mol-% Ethylen und 32 Mol-% Vinylacetat werden bei 70 bis 75°C in 3471 Teilen Cyclohexan gelöst. Anschließend werden 445 Teile Sorbitanmonooleat eingerührt. Nach 30 Minuten wird eine Mischung aus 882 Teilen Wasser, 222 Teilen 80fach ethoxylierten Talgfettalkohols, 70 Teilen Dimethylethanolamins und 90 Teilen einer 10%igen wäßrigen Polysiloxanemulsion als Entschäumer einemulgiert. Nach 30-minütigem Rühren gibt man 2063 Teile Wasser zu und läßt abkühlen. Man erhält eine 35gew.-%ige in jeder Hinsicht stabile Sekundärdispersion mit einer Teilchengröße von 0,1 bis 0,8 μm.

### Beispiel 3

In 348 Teilen eines o-/p-Xylolgemisches werden 278 Teile eines Copolymerisats aus 72 Mol-% Ethylen und 28 Mol-% Vinylacetat bei 80 bis 85°C in einem Rührkessel gelöst. Anschließend rührt man 45 Teile Sorbitanmonooleat ein.

Nach halbstündigem Rühren emulgiert man eine Mischung aus 64 Teilen einer 25gew.-%igen wäßrigen Lösung eines 25fach ethoxylierten p-Isooctylphenols, 7 Teilen Methyldiethanolamins und 7 Teilen einer 10gew.-%igen wäßrigen Polysiloxandispersion als Entschäumer ein und rührt 20 Minuten weiter. Zum Schluß gibt man 200 Teile vollentsalztes Wasser zu und läßt abkühlen.

Man erhält eine stabile, pump- und fließfähige 35%ige Sekundärdispersion mit einer Teilchengröße von 0,5 bis 1 μm.

### Beispiel 4

Rohöl A der Provenienz Süddeutschland wurde mit wechselnden Mengen einer gemäß Beispiel 1 erhaltenen Dispersion versetzt. Die Zugabe erfolgte durch Einrühren der Dispersion bei 50°C innerhalb 30 Minuten.

| | Stockpunkt |
|---|---|
| Rohöl A (Blindwert) | +15°C |
| Rohöl + 300 ppm Dispersion | − 7°C |
| Rohöl + 700 ppm Dispersion | −14°C |

### Beispiel 5

In Rohöl B (Provenienz Indien) wurde eine Dispersion gemäß Beispiel 2 bis 60°C innerhalb 30 Minuten eingerührt.

| | Stockpunkt |
|---|---|
| Rohöl B (Blindwert) | +27°C |
| Rohöl + 300 ppm Dispersion | +12°C |
| Rohöl + 600 ppm Dispersion | + 5°C |

### Beispiel 6

In Rohöl (Provenienz Emsland) wurde eine Dispersion gemäß Beispiel 3 bei 40°C unter starkem Rühren (Ultra-Turrax) innerhalb 2 Minuten eingebracht.

| | Stockpunkt |
|---|---|
| Rohöl (Blindwert) | +27°C |
| Rohöl + 300 ppm Dispersion | +11°C |
| Rohöl + 600 ppm Dispersion | + 3°C |
| Rohöl + 1000 ppm Dispersion | − 6°C |

### Patentansprüche

1. Verfahren zur Herstellung von Polymerisat-Sekundärdispersionen, dadurch gekennzeichnet, daß man

a) 30 bis 70 Gew.-Teile eines Copolymerisats des Molgewichts von mindestens 10 000 aus einem $C_2$- bis $C_4$-$\alpha$-Olefin oder Styrol und einem damit copolymerisierbaren olefinischen Monomeren, das mindestens eine Ether- oder Estergruppierung enthält, in 70 bis 30 Gew.-Teilen eines mit Wasser nicht mischbaren organischen Lösungsmittels löst,

b) die erhaltene Lösung mit — bezogen auf die Lösung — 2 bis 5 Gew.-% eines Esters einer $C_{12}$- bis $C_{22}$-gesättigten oder ungesättigten Fettsäure mit einem 3- bis 6-wertigen aliphatischen Alkohol versetzt, anschließend

c) 2 bis 6 Gew.-% — bezogen auf die Lösung — eines gegebenenfalls sulfatierten 10- bis 80fachethoxylierten $C_8$- bis $C_{20}$-Alkanols oder $C_8$- bis $C_{12}$-Alkylphenols in 20- bis 50gew.-%iger wäßrig-alkalischer Lösung, die einen pH-Wert von 8,5 bis 11 aufweist, einemulgiert und

d) die erhaltene Wasser-in-Öl-Emulsion mit einer zur Umkehrung der Emulsion notwendigen Menge an Wasser versetzt, wobei die Schritte a) bis d) bei Temperaturen von mindestens 60°C durchgeführt werden.

2. Verwendung der nach Anspruch 1 hergestellten Dispersionen als Stockpunkterniedriger für Mineralöle.

3. Verfahren zur Herstellung von Polymerisat-Sekundärdispersionen, dadurch gekennzeichnet, daß man — mit Ausnahme der angegebenen Abwandlung — das in Anspruch 1 beschriebene Verfahren anwendet, wobei man in Stufe a) ein Ethylen-Vinylacetat-Copolymerisat einsetzt und in Stufe b) in Abwandlung von Anspruch 1, die in Stufe a) erhaltene Lösung mit 7,1 Gew.-% Sorbitanmonooleat — bezogen auf die Lösung — versetzt.

4. Verfahren zur Herstellung von Polymerisat-Sekundärdispersionen, dadurch gekennzeichnet, daß man — mit Ausnahme der angegebenen Abwandlung — das in Anspruch 1 beschriebene Verfahren anwendet, wobei man in Stufe a) ein Ethylen-Vinylacetat-Copolymerisat einsetzt und in Stufe b) in Abwandlung von Anspruch 1, die in Stufe a) erhaltene Lösung mit 7,2 Gew.-% Sorbitanmonooleat — bezogen auf die Lösung — versetzt.

### Claims

1. A process for the preparation of secondary polymer dispersions, wherein

(a) 30 to 70 parts by weight of a copolymer, having a molecular weight of at least 10 000 and prepared from a $C_2$—$C_4$-$\alpha$-olefin or styrene and an olefinic monomer which is copolymerizable therewith and contains at least one ether or ester group, is dissolved in 70 to 30 parts by weight of a water-immiscible organic solvent,

(b) the resulting solution has added to it from 2 to 6% by weight, based on the solution, of an ester of a saturated or unsaturated fatty acid of 12 to 22 carbon atoms with a trihydric to hexahydric aliphatic alcohol, then

(c) 2 to 6% by weight, based on the solution, of an optionally sulphated $C_8$—$C_{20}$-alkanol or $C_8$—$C_{12}$-alkyl-phenol containing from 10 to 80 ethylene oxide units is dispersed in 20 to 50% strength by weight aqueous alkaline solution, having a pH of from 8.5 to 11, to give an emulsion, and

(d) the resulting water-in-oil emulsion has added to it the necessary amount of water to invert the emulsion, steps (a) to (d) being carried out at a temperature of at least 60° C.

2. The use of the dispersions prepared as claimed in claim 1 as pour-point depressants for mineral oils.

3. A process for the preparation of secondary polymer dispersions, wherein the process described in claim 1, except for the specified modification, is employed, an ethylene/vinyl acetate copolymer being used in step (a) and, as a modification of claim 1, the solution obtained in step (a) having added to it in step (b) 7.1% by weight, based on the solution, of sorbitan mono-oleate.

4. A process for the preparation of secondary polymer dispersions, wherein the process described in claim 1, except for the specified modification, is employed, an ethylene/vinyl acetate copolymer being used in step (a) and, as a modification of claim 1, the solution obtained in step (a) having added to it in step (b) 7.2% by weight, based on the solution, of sorbitan mono-oleate.

**Revendications**

1. Procédé pour le préparation de dispersions secondaires de polymères, caractérisé en ce que

a) l'on dissout, dans 70 à 30 parties en poids d'un solvant organique non miscible à l'eau, 30 à 70 parties en poids d'un produit de copolymérisation, ayant un poids moléculaire d'au moins 10 000, d'une $\alpha$-oléfine en $C_2$ à $C_4$ ou de styrène et d'un monomère oléfinique qui est copolymérisable et qui contient au moins un groupement éther ou ester,

b) on additionne la solution obtenue de 2 à 6% en poids (par rapport à la solution) d'un ester d'un acide gras saturé ou insaturé en $C_{12}$ à $C_{22}$ avec un alcool aliphatique tri- à hexavalent, puis

c) on y introduit et on met en émulsion 2 à 6% en poids (par rapport à la solution) d'un alcanol en $C_8$ à $C_{20}$ ou un alkylphénol en $C_8$ à $C_{12}$

éthoxylé 10 à 80 fois et éventuellement sulfaté en solution aqueuse-alcaline à 20—50% en poids, présentant un pH de 8,5 à 11, et

d) on additionne l'émulsion eau-dans-huile obtenue d'une quantité d'eau nécessaire pour l'inversion de l'émulsion, les phases a) à d) étant menées à des températures d'au moins 60° C.

2. Utilisation des dispersions préparées suivant la revendication 1 comme additif abaissant le point d'écoulement pour des huiles minérales.

3. Procédé pour la préparation de dispersions secondaires de polymères, caractérisé en ce qu'à l'exception de la modification indiquée, on applique le procédé décrit dans la revendication 1, en utilisant, dans la phase a), un copolymère d'éthylène-acétate de vinyle et, dans la phase b), à titre de modification par rapport à la revendication 1, en additionnant la solution obtenue dans la phase a) de 7,1% en poids de monooléate de sorbitanne par rapport à la solution.

4. Procédé pour la préparation de dispersions secondaires de polymères, caractérisé en ce qu'à l'exception de la modification indiquée, on applique le procédé décrit dans la revendication 1, en utilisant, dans la phase a), un copolymère d'éthylène-acétate de vinyle et, dans la phase b), à titre de modification par rapport à la revendication 1, en additionnant la solution obtenue dans la phase a) de 7,2% en poids de monooléate de sorbitanne par rapport à la solution.